# FASCICULE DE BREVET EUROPEEN

(11) **EP 1 775 511 B1**
(45) Date de publication et mention de la délivrance du brevet: **05.08.2009**
(21) Numéro de dépôt: 06291565.7
(22) Date de dépôt: 06.10.2006
(51) Int. Cl.: F21S 8/00

(54) **Dispositif d'éclairage ou de signalisation à guide optique pour véhicule automobile**
Kfz-Signal- und/oder Beleuchtungseinrichtung mit einem Lichtleiter
Vehicle lighting or signalling device with a light guide

(30) Priorité: 11.10.2005 FR 0510391
(43) Date de publication de la demande: 18.04.2007
(73) Titulaire: VALEO VISION, 93012 Bobigny Cedex (FR)
(72) Inventeur: Bourdin, David, 93190 Livry Gargan (FR); Muller, Julien, 75017 Paris (FR); Dubosc, Christophe, 93250 Villemomble (FR)
(74) Mandataire: Renous Chan, Véronique

(56) Documents cités:
- EP-A- 0 478 102
- EP-A- 1 434 000
- WO-A-02/40917
- DE-A1- 10 036 812
- US-A- 4 949 226

## Description

La présente invention a pour objet un dispositif d'éclairage ou de signalisation équipant un véhicule automobile, comportant au moins un guide optique apte à produire une diffusion de la lumière sur au moins une partie de sa longueur. L'invention concerne aussi un véhicule comportant un tel dispositif d'éclairage ou de signalisation.

Dans le domaine de l'éclairage et de la signalisation de véhicules automobiles, il est de plus en plus fréquent d'utiliser des guides optiques. Un guide optique est, très schématiquement, un élément allongé de matière transparente, généralement sous forme d'un cylindre. A proximité de l'une des extrémités du guide, appelée face d'entrée du guide, est disposée une (ou plusieurs) sources lumineuse, par exemple une source lumineuse de petite taille du type diode électroluminescente : les rayons lumineux émis par cette source se propagent par réflexion totale dans la longueur du guide en direction de son extrémité opposée, appelée face terminale du guide. Une partie des rayons lumineux se propageant dans le guide va en sortir par la face dite face avant du guide grâce à la présence d'éléments réfléchissants disposés sur la face dite face arrière du guide, opposée à la précédente. Ces éléments réfléchissants sont constitués par exemple de prismes. Le guide émet ainsi de la lumière sur toute sa longueur. Il présente l'avantage de pouvoir prendre des formes géométriques très variées, être rectiligne ou en arc de cercle, et amener une surface éclairante même dans des zones peu accessibles du projecteur ou du feu du véhicule. Il participe ainsi fortement au style du projecteur ou du feu. Cependant, les guides de lumières existants sont perfectibles : en effet, il est souvent délicat d'assurer un niveau d'éclairement identique entre la première et la seconde extrémité du guide, tout particulièrement s'il a une longueur significative, le niveau d'éclairement ayant tendance à diminuer au fur et à mesure qu'on s'éloigne de la face d'entrée du guide. Par ailleurs, il est aussi délicat d'assurer un aspect homogène du guide quelque soit l'angle de vision que l'on a du guide, la lumière sortant du guide ayant une répartition angulaire souvent insuffisamment large. Or c'est un point important selon la disposition du guide et sa forme à l'intérieur du projecteur ou du feu : On a tendance à concevoir le guide de façon à ce qu'il éclaire principalement dans l'axe du véhicule afin de répondre aux normes photométriques. Or, il s'avère aussi important d'avoir un aspect allumé homogène et agréable visuellement également quand l'observateur s'écarte de l'axe longitudinal du véhicule. On peut aussi vouloir améliorer le rendement optique du guide, car il peut y avoir des fuites de lumière perdues, par la face arrière du guide notamment.

Il est déjà connu du brevet EP 1 443 265 d'associer à un guide de lumière un réflecteur situé à l'arrière du guide de lumière, afin de limiter au mieux les fuites de lumière et d'améliorer ainsi le rendement optique du guide. La demande de brevet WO02/40917 divulgue un dispositif de signalisation de véhicule dans lequel une couche réfléchissante est disposée par adhérence contre la face de réflexion d'un guide optique.

L'invention a alors pour but l'obtention d'un guide de lumière amélioré, qui permette notamment d'avoir un aspect éclairé plus homogène, tout particulièrement dans une large plage d'angles d'incidence de vision.

L'invention a tout d'abord pour objet un dispositif d'éclairage et/ou de signalisation pour véhicule automobile comportant au moins une source lumineuse émettant un faisceau lumineux et au moins un guide optique dans lequel se propage ledit faisceau lumineux, ledit guide optique comportant
- une première face formant une face de sortie du faisceau lumineux, et
- une seconde face, opposée à la face de sortie, formant une face de réflexion du faisceau lumineux,
   tel que le guide de lumière est associé à un écran diffusant disposé en regard de la face de réflexion du guide de lumière.

On a pu montrer que la présence de cet élément diffusant avait, de manière surprenante, un impact significatif sur l'aspect allumé du guide : il permet en fait de récupérer la lumière s'échappant du guide par sa face arrière, et de la renvoyer, au moins en partie, dans le guide avec une largeur angulaire élevée, de part son caractère diffusant. Cela a deux conséquences avantageuses : le guide a un rendement optique plus élevé, et il émet par sa face avant une lumière plus étalée, et de direction plus anisotrope : d'où qu'on l'observe, le guide garde un aspect allumé assez homogène, alors qu'en l'absence d'élément diffusant, le guide présente un aspect peu/pas allumé ni homogène à angle d'incidence élevée, dès qu'on s'éloigne d'un angle de vision correspondant à l'axe longitudinal du véhicule notamment.

On a aussi observé que l'invention autorisait l'utilisation de ce type de guide de lumière linéaire pour réaliser une fonction de type répétiteur d'indicateur de direction (une fonction dite « side marker » en anglais).

De préférence, la face de réflexion du guide selon l'invention est munie de prismes réfléchissants. De façon connue, en effet, la présence de ces prismes permet de faire sortir de façon contrôlée du guide une fraction de rayons lumineux sur sa longueur : chaque rayon se propageant dans le guide et frappant la zone active optiquement de ces prismes est redirigée hors du guide par sa face avant.

Alternativement ou cumulativement à la présence de prismes, la face de réflexion du guide peut être munie de foyers de réflexion de la lumière, notamment sous forme de creux par rapport à la surface substantiellement lisse par ailleurs de ladite face. Ces foyers de réflexion peuvent être obtenus par altération superficielle de la face de réflexion, et peuvent être de conception similaire à celle décrite dans le brevet EP 1 434 000 pour des guides de lumière de type plus surfacique que linéaire comme dans le cas présent.

La face de réflexion du guide comporte donc des moyens réfléchissants, qui sont en fait des moyens de découplage, et qui sont indépendants de l'écran diffusant, ces moyens de découplage étant indispensables pour obtenir la photométrie voulue.

De préférence, l'écran diffusant présente une surface en regard de la face de réflexion du guide qui est essentiellement opaque aux rayonnements dans le visible, son but étant de récupérer et renvoyer dans le guide la lumière perdue sortant de la face de réflexion. Avantageusement, l'écran diffusant présente une surface en regard de la face de réflexion du guide qui est de couleur claire. Elle peut être, par exemple, base d'oxyde de titane ou de polymère blanchi, notamment du polycarbonate blanchi.

L'écran diffusant peut être fixé à ou fait partie intégrante d'un masque du dispositif. Un masque (« bezel » en anglais) se comprend comme une pièce de style permettant d'assurer une continuité de surface entre, par exemple, un réflecteur et le bord d'un boîtier ou de la glace du projecteur ou du feu. Le masque peut avoir différents aspects, notamment mat ou au contraire brillant et se rapprochant de l'aspect d'un réflecteur. Intégrer l'écran diffusant selon l'invention à un masque associé à un réflecteur d'une fonction principale d'éclairage ou de signalisation est intéressant techniquement : on n'ajoute pas de pièce supplémentaire, on gagne en simplicité de montage et en tolérance de positionnement entre les composants du feu ou du projecteur dans leur ensemble. L'écran diffusant peut faire partie intégrante d'un masque du dispositif, par modification locale des propriétés/de l'aspect superficiels dudit masque, notamment par érosion superficielle, ajout ou suppression d'un revêtement. Il peut par exemple s'agir d'un masque aluminé, dont une zone est dépourvue de couche d'aluminium et éventuellement dépolie pour avoir le niveau de pouvoir diffusant suffisant.

L'écran diffusant est conçu de façon à ce que les rayons lumineux qui l'atteignent produisent un faisceau très large en repartant vers le guide, et - en moyenne-, dans une direction opposée à la direction incidente des rayons sur l'écran. L'écran peut prendre la forme d'un réflecteur avec un fort grainage. Il peut aussi se présenter sous la forme d'un substrat en matériau polymère diffusant dont un côté est rendu réfléchissant, par dépôt d'une couche en métal, en aluminium par exemple.

Il est avantageux que l'écran diffusant ne soit pas trop proche voire en contact direct avec le guide : on choisit généralement une distance d'au moins 0.5 mm entre l'écran diffusant et la face de réflexion du guide, notamment une distance comprise entre 1 et 5 mm. L'efficacité de l'écran s'en trouve améliorée, les rayons rediffusés par l'écran ayant alors suffisamment de trajet à parcourir avant d'entrer à nouveau dans le guide pour s'étaler avec la large amplitude angulaire recherchée.

L'écran diffusant reçoit ainsi des rayons lumineux sortant du guide par la face de réflexion du guide et les redirige vers ladite face de réflexion avec une distribution angulaire sensiblement lambertienne.

L'invention s'efforce de « récupérer » des rayons lumineux qui sinon seraient perdus, sans modifier sensiblement, sans dégrader, les performances photométriques des autres rayons lumineux se propageant dans le guide.

La modification du guide est simple à réaliser, dans la mesure où l'on peut conserver la conception des guides de lumière connue, et y ajouter cet écran diffusant.

L'invention sera décrite en détails à l'aide d'un exemple de réalisation non limitatif, illustré par les figures suivantes :
La figure 1 représente une vue en perspective d'un guide optique selon l'invention destiné à être incorporé dans un feu de véhicule automobile.
La figure 2 représente une section transversale du guide selon la figure 1,
La figure 3 représente une section longitudinale du guide,
La figure 4 représente une portion du guide selon les figures précédentes, et détaillant le cheminement de rayons lumineux à travers celui-ci.

Toutes ces figures sont très schématiques et ne respectent pas nécessairement l'échelle pour en faciliter la lecture.

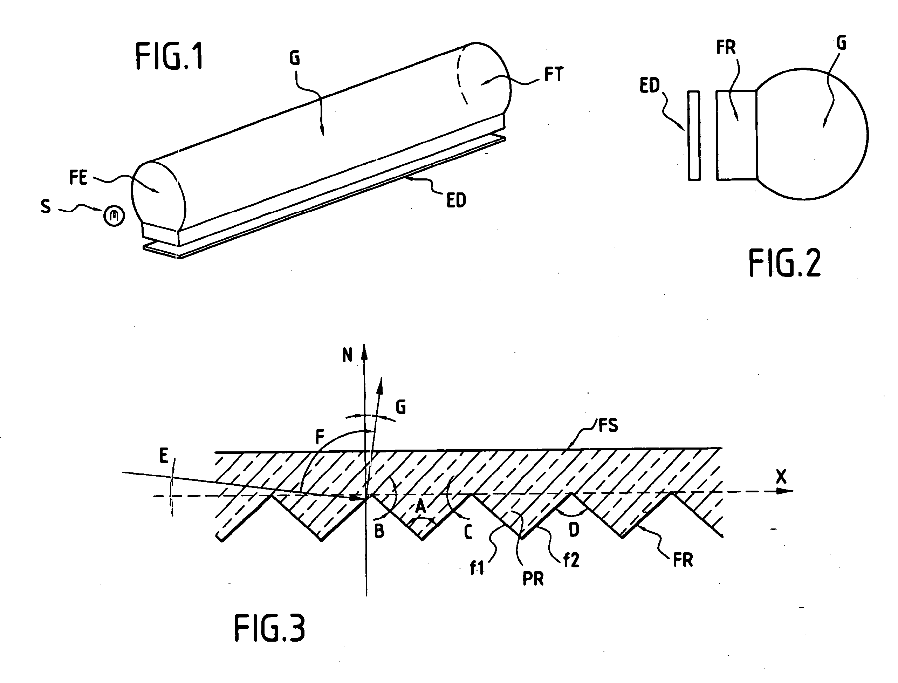

Les figures 1 et 2 montrent une vue en perspective et en coupe d'un guide optique G destiné à propager un faisceau lumineux émis par une source lumineuse S. Le guide optique, dans cet exemple, est rectiligne.

Il est bien entendu que le guide optique, selon l'invention, peut avoir d'autres formes comme, par exemple, comporter des courbures, une ou plusieurs portions d'arc de cercle etc. ....L'invention s'applique également à ces guides courbes mutadis mutandi.

Dans ce mode de réalisation, le guide optique G a une section circulaire ; il est bien entendu qu'il peut aussi, dans d'autres modes de réalisation, avoir une section elliptique, carrée, ovale, voire carrée etc.

Dans ce mode de réalisation, le guide optique G est à base de polymère transparent en polycarbonate (ou polymétacrylate de méthyle PMMA), de préférence de qualité cristal.

Ce guide optique présente une face dite d'entrée FE à l'une de ses extrémités, au regard de laquelle est disposée une diode électroluminescente S, et une face terminale FT, qui constitue l'extrémité opposée à la précédente, et qui est dépourvue de source lumineuse. Optionnellement, il est possible de prévoir une seconde source lumineuse à chacune des extrémités du guide. Le guide comporte par ailleurs deux faces principales orientées selon sa longueur:
- une première face FS constituant une face de sortie des rayons lumineux propagés dans le guide optique G ; cette face de sortie FS peut être lisse et continue, ou bien comporter des stries
- une deuxième face FR, opposée à la première face FS, constituant une face de réflexion du guide optique G, qui est donc munie d'éléments réfléchissants.

Selon une première variante, comme représenté en figure 3, il s'agit d'une succession de prismes PR. Ces prismes PR sont placés côte à côte et assurent une réflexion des rayons lumineux ayant un angle d'incidence non nul avec l'axe X du guide optique G. Chaque prisme a une forme sensiblement triangulaire ; chaque prisme comporte une base, une facette f1 et une facette f2, planes et non parallèles et un sommet A. Elles sont ici symétriques par rapport à la normale N à l'axe X du guide optique, c'est-à-dire qu'elles ont des dimensions et des angles B et C identiques, de part et d'autre de leur bissectrice. Elles peuvent aussi être asymétriques, c'est-à-dire qu'elles ont des dimensions et/ou des angles B et C différents. On dit alors que le guide optique est à prismes dissymétriques. On trouvera des exemples de prismes non symétriques notamment dans la demande de brevet européen EP 05291258.1 déposée le 10 juin 2005, dont le numéro de publication est EP 1 605 201.

Selon une seconde variante (éventuellement cumulative avec la première), les éléments réfléchissants sont sous forme de picots réfléchissants : des creux répartis régulièrement à la surface de la face FR, notamment lors du moulage de la pièce même constituant le guide G. Pour leur dimensionnement et leur répartition, on peut notamment se reporter à la description des foyers réfléchissants superficiels décrits dans le brevet EP 1 434 000.

On associe selon l'invention à ce guide un écran diffusant ED. Cet écran est à base de polycarbonate blanchi diffusant. Il est disposé en regard de la face FR du guide, et il est choisi substantiellement plan. Selon la première variante, les crêtes des prismes PR de la face de réflexion FR passent par un plan parallèle au plan de l'écran diffusant. De préférence, comme illustré ici, les dimensions de l'écran sont suffisamment importantes et la distance entre guide et écran est choisie telle que tout ou l'essentiel des rayons s'échappant par la face de réflexion du guide sont collectés par l'écran diffusant. La distance entre la surface diffusante de l'écran et le plan passant par les crêtes des prismes du guide est ici choisie d'environ 1 mm. Cette distance peut légèrement varier sur la longueur du guide sans perdre de manière significative l'avantage procuré par l'invention. Il est seulement préféré d'éviter un contact direct entre le guide et l'écran.

Ces rayons sont ensuite renvoyés avec une distribution lambertienne dans le guide en traversant à nouveau la face de réflexion du guide. Ces rayons, une fois rentrés dans le guide vont soit poursuivre leur chemin de propagation dans le guide, soit sortir par la face de sortie FS en s'ajoutant aux autres rayons sortants. Globalement, l'ensemble des rayons sortant par la face de sortie va donc être d'intensité plus forte et de répartition angulaire plus large, plus étalée, d'où un aspect plus éclairé et, surtout, plus homogène quelque soit l'angle de vision.

Selon une première variante, La face de sortie FS du guide optique est lisse. Selon une seconde variante non représentée, elle a un profil strié, comme par exemple écrit dans la demande de brevet européen précitée. Ces stries permettant de modifier l'orientation, de « redresser » les rayons lumineux en sortie du guide optique, c'est-à-dire de les faire sortir du guide optique avec un angle négatif par rapport à la normale N à l'axe X du guide.

Ces stries peuvent être de différentes formes, par exemple, en forme de prismes ou bien de dômes ou bien une combinaison de prismes et de dômes.

Quand on choisit la variante où la face de sortie est munie de stries, chaque strie de la face de sortie FS est de préférence située en regard d'un prisme PR (ou autre élément réfléchissant) de la face de réflexion FR.

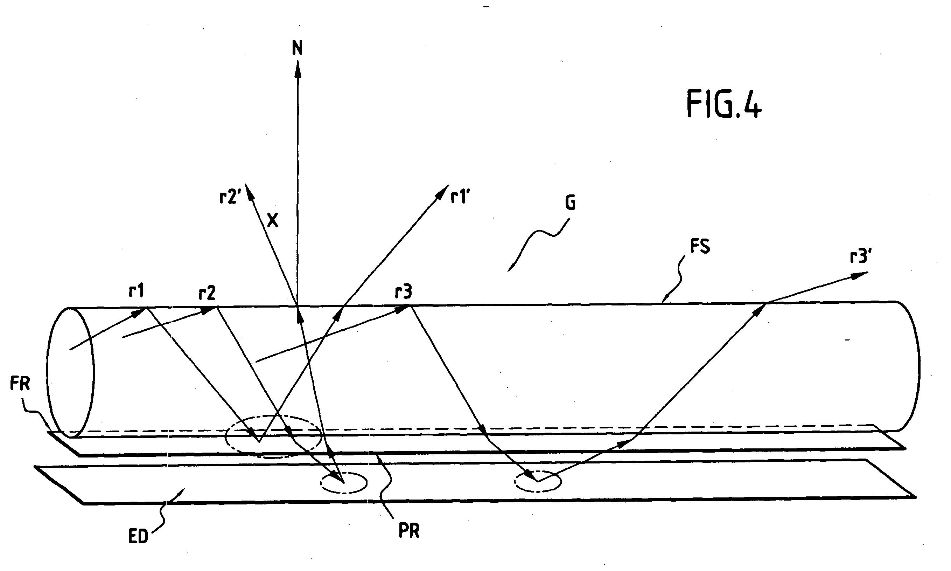

La figure 4 détaille le cheminement de quelques rayons lumineux dans le guide pour clarifier son mode de fonctionnement en association avec l'écran diffusant, en choisissant la variante où la face de réflexion du guide est munie de prismes réfléchissants. Trois rayons lumineux r1, r2 et r3 émis par la source S se propagent par réflexion totale dans le corps du guide :
- Le rayon r1 atteint la facette optiquement active f1 d'un prisme PR de la face de réflexion FR du guide G : il est renvoyé vers la face de sortie FS avec un angle tel qu'il sort du guide pour donner au guide son aspect allumé (r1').
- Le rayon r2 frappe la face de réflexion dans une zone inactive, non réfléchissante (facette f2 non active optiquement du prisme, zone séparant deux prismes...) : il s'échappe du guide G par sa face de réflexion FR. Sans l'invention, il serait perdu et ferait diminuer le rendement lumineux du guide. L'écran diffusant ED selon l'invention le collecte et le renvoie selon un angle donné vers la face de réflexion : le rayon rentre dans le guide à nouveau, il est réfracté, puis il sort par la face de sortie FS du guide (r2') : il peut alors comme représenté, sortir du guide avec un angle x qui est négatif par rapport à la normale N au guide G, contrairement au rayon r1' précédent. Grâce à cet écran diffusant, on a ainsi un éclairement du guide dans des directions autres que celles spécifiées pour concevoir la géométrie des prismes réfléchissants afin de respecter les réglementations en vigueur. Cet effet technique est très intéressant notamment quand ce type de guide doit équiper un feu avec un retour d'aile important.
- le rayon r3 suit le même type de cheminement et de renvoi dans le guide par l'écran diffusant ED, mais avec un angle d'incidence différent quand il atteint l'écran, et donc un angle de renvoi par l'écran, différent. De fait, il va pouvoir alors sortir du guide par la face de sortie avec un angle (r3') différent de celui de r2' et de r1'.

Bien sûr, ce n'est qu'une vision schématique du chemin des rayons lumineux, l'écran renvoyant la lumière qui l'atteint de façon diffusante, selon une répartition lambertienne.

Les rayons sortants de la face FS du guide sont ainsi l'addition des rayons sortant directement du guide et de ceux qui ont été renvoyés dans le guide par l'écran. Cette addition conduit à des angles de sortie des rayons émis par la face FS d'amplitude angulaire significativement plus large. Le guide de lumière préserve son aspect allumé même à angle d'incidence élevé par rapport à la normale au guide G. La fonction remplie par le guide, notamment la fonction de signalisation du type lanterne, s'en trouve mieux remplie, et l'esthétique du guide à l'état allumé est améliorée

Dans un mode de réalisation, non représenté sur les figures, par mesure de simplification, le dispositif d'éclairage ou de signalisation de l'invention comporte au moins deux sources lumineuses placées chacune à une extrémité du guide optique. Le guide optique peut ainsi propager des rayons lumineux à partir des deux extrémités du guide optique, ce qui permet d'augmenter la longueur du guide optique.

Dans un autre mode de réalisation de l'invention, le dispositif d'éclairage ou de signalisation comporte plusieurs guides optiques placés de façon à avoir au moins une intersection commune. Une source lumineuse est placée à ce point d'intersection de façon à émettre des faisceaux lumineux dans chacun des guides optiques.

## Revendications

1. Dispositif d'éclairage et/ou de signalisation pour véhicule automobile comportant au moins une source lumineuse (S) émettant un faisceau lumineux et au moins un guide optique (G) dans lequel se propage ledit faisceau lumineux, ledit guide optique comportant
- une première face formant une face de sortie (FS) du faisceau lumineux, et
- une seconde face, opposée à la face de sortie, formant une face de réflexion (FR) du faisceau lumineux,
- ledit guide de lumière (G) est associé à un écran diffusant (ED) disposé en regard de la face de réflexion (FR) du guide de lumière (G)
**caractérisé en ce que** la face de réflexion (FR) est munie d'éléments réfléchissants de manière à ce qu'une partie des rayons émis par la source soit réfléchie vers ladite face de sortie (FS), une autre partie des rayons s'échappant de la face de réflexion (FR) vers ledit écran diffusant, qui la renvoie, au moins partiellement, dans le guide de lumière (G), et **en ce que** l'écran diffusant (ED) est disposé à distance de la face de réflexion (FR) du guide de lumière, de sorte que d'où qu'on l'observe, le guide garde un aspect allumé homogène.

2. Dispositif selon la revendication précédente, **caractérisé en ce** lesdits éléments réfléchissants sont des prismes réfléchissants (PR) comportant une facette optiquement active réfléchissant une partie des rayons vers la face de sortie (FS) avec un angle tel qu'il sort dudit guide de lumière (G) et une facette non active optiquement permettant à certains rayons de s'échapper du guide (G) par ladite face de réflexion (FR).

3. Dispositif selon la revendication précédente, **caractérisé en ce que** lesdits prismes ont une forme sensiblement triangulaire et comportent une base, une première facette (f1) et une deuxième facette (f2), planes et non parallèles et un sommet (A), lesdites facettes étant symétriques ou asymétriques.

4. Dispositif selon la revendication 1, **caractérisé en ce que** la face de réflexion (FR) est munie de foyers de réflexion de la lumière, notamment sous forme de creux par rapport à la surface substantiellement lisse par ailleurs de ladite face.

5. Dispositif selon la revendication précédente, **caractérisé en ce que** les foyers de réflexion sont obtenus par altération superficielle de la face de réflexion (FR).

6. Dispositif selon l'une des revendications précédentes, **caractérisé en ce que** l'écran diffusant (ED) présente une surface en regard de la face de réflexion (FR) du guide qui est essentiellement opaque aux rayonnements dans le visible.

7. Dispositif selon l'une des revendications précédentes, **caractérisé en ce que** l'écran diffusant (ED) présente une surface en regard de la face de réflexion (FR) du guide qui est de couleur claire.

8. Dispositif selon l'une des revendications précédentes, **caractérisé en ce que** l'écran diffusant (ED) présente une surface en regard de la face de réflexion (FR) du guide qui est à base d'oxyde de titane ou de polymère blanchi, notamment du polycarbonate blanchi.

9. Dispositif selon l'une des revendications précédentes, **caractérisé en ce que** l'écran diffusant (ED) est fixée à ou fait partie intégrante d'un masque du dispositif.

10. Dispositif selon l'une des revendications précédentes, **caractérisé en ce que** l'écran diffusant (ED) fait partie intégrante d'un masque du dispositif, par modification locale des propriétés/de l'aspect superficiels dudit masque, notamment par érosion superficielle, ajout ou suppression d'un revêtement..

11. Dispositif selon l'une des revendications précédentes, **caractérisé en ce que** l'écran diffusant (ED) est disposé à une distance d'au moins 0.5 mm de la face de réflexion (FR) du guide.

12. Dispositif selon la revendication 11, **caractérisé en ce que** l'écran diffusant (ED) est disposé à une distance comprise entre 1 et 5 mm.

13. Dispositif selon l'une des revendications précédentes, **caractérisé en ce que** l'écran diffusant (ED) reçoit des rayons lumineux sortant du guide (G) par la face de réflexion (FR) du guide et les redirige vers ladite face de réflexion (FR) avec une distribution angulaire sensiblement lambertienne.

## Claims

1. Lighting and/or signalling device for a motor vehicle, comprising at least one light source (S) emitting a light beam and at least one optical guide (G) in which the said light beam propagates, the said optical guide comprising
- a first face forming an exit face (FS) for the light beam, and
- a second face, opposite to the exit face, forming a reflection face (FR) for the light beam,
- the said light guide (G) is associated with a diffusing screen (ED) disposed opposite the reflection face (FR) of the light guide (G),
**characterised in that** the reflection face (FR) is provided with reflective elements so that some of the rays emitted by the source are reflected towards the said exit face (FS), other rays escaping from the reflection face (FR) towards the diffusing screen, which returns them, at least partially, into the light guide (G), and **in that** the diffusing screen (ED) is disposed at a distance from the reflection face (FR) of the light guide, so that, from where it is observed, the guide keeps a homogeneous illuminated aspect.

2. Device according to the preceding claim, **characterised in that** said reflective elements are reflective prisms (PR) comprising an optically active facet reflecting some of the rays towards the exit face (FS) at an angle such that they leave the said light guide (G) and an optically non-active facet enabling some rays to escape from the guide (G) through the said reflection face (FR).

3. Device according to the preceding claim, **characterised in that** said prisms have a substantially triangular form and comprise a base, a first facet (f1) and a second facet (f2), planar and non-parallel, and a vertex (A), the said facets being symmetrical or asymmetric.

4. Device according to claim 1, **characterised in that** the reflection face (FR) is provided with foci reflecting the light, in particular in the form of hollows with respect to the otherwise substantially smooth surface of the said face.

5. Device according to the preceding claim, **characterised in that** the reflection foci are obtained by surface alteration of the reflection face (FR).

6. Device according to one of the preceding claims, **characterised in that** the diffusing screen (ED) has a surface opposite the reflection face (FR) of the guide that is essentially opaque to radiation in the visible range.

7. Device according to one of the preceding claims, **characterised in that** the diffusing screen (ED) has a surface opposite the reflection face (FR) of the guide that is light in colour.

8. Device according to one of the preceding claims, **characterised in that** the diffusing screen (ED) has a surface opposite the reflection face (FR) of the guide that is based on titanium oxide or bleached polymer, in particular bleached polycarbonate.

9. Device according to one of the preceding claims, **characterised in that** the diffusing screen (ED) is fixed to or forms an integral part of a mask of the device.

10. Device according to one of the preceding claims, **characterised in that** the diffusing screen (ED) forms an integral part of a mask of the device, by local modification of the properties/surface appearance of the said mask, in particular by surface erosion, addition or removal of a coating.

11. Device according to one of the preceding claims, **characterised in that** the diffusing screen (ED) is disposed at a distance of at least 0.5 mm from the reflection face (FR) of the guide.

12. Device according to claim 11, **characterised in that** the diffusing screen (ED) is disposed at a distance of between 1 and 5 mm.

13. Device according to one of the preceding claims, **characterised in that** the diffusing screen (ED) receives light rays emerging from the guide (G) through the reflection face (FR) of the guide and redirects them towards the said reflection face (FR) with a substantially Lambertian angular distribution.

## Patentansprüche

1. Beleuchtungs- und/oder Signalgebungsvorrichtung für Kraftfahrzeuge, mit wenigstens einer ein Lichtbündel emittierenden Lichtquelle (S) und wenigstens einem Lichtleiter (G), in dem sich das Lichtbündel ausbreitet, wobei der Lichtleiter
- eine erste Fläche, die eine Austrittsfläche (FS) für das Lichtbündel bildet, und
- eine zweite, der Austrittsfläche entgegengesetzte Fläche, die eine Reflexionsfläche (FR) für das Lichtbündel bildet, umfasst,
- wobei der Lichtleiter (G) einem Streuschirm (ED) zugeordnet ist, der gegenüber der Reflexionsfläche (FR) des Lichtleiters (G) angeordnet ist,
**dadurch gekennzeichnet, dass** die Reflexionsfläche (FR) solchermaßen mit Reflexionselementen versehen ist, dass ein Teil der von der Lichtquelle emittierten Lichtstrahlen zur Austrittsfläche (FS) reflektiert wird, ein anderer Teil der Lichtstrahlen jedoch über die Reflexionsfläche (FR) in Richtung des Streuschirms austritt, der diese wenigstens zum Teil in den Lichtleiter (G) zurückreflektiert, und dass der Streuschirm (ED) mit Abstand zur Reflexionsfläche (FR) des Lichtleiters so angeordnet ist, dass der Lichtleiter unabhängig davon, von wo aus er betrachtet wird, ein homogen erleuchtetes Aussehen in eingeschaltetem Zustand beibehält.

2. Vorrichtung nach dem vorhergehenden Anspruch,
**dadurch gekennzeichnet, dass** die Reflexionselemente Reflexionsprimsen (PR) sind, mit einer optisch wirksamen Facette, die einen Teil der Lichtstrahlen in einem solchen Winkel zur Austrittsfläche (FS) reflektiert, dass diese aus dem Lichtleiter (G) austreten, und mit einer optisch nicht wirksamen Facette, die es bestimmten Lichtstrahlen ermöglicht, aus dem Lichtleiter (G) über die Reflexionsfläche (FR) auszutreten.

3. Vorrichtung nach dem vorhergehenden Anspruch,
**dadurch gekennzeichnet, dass** die Prismen im Wesentlichen dreikantförmig sind und eine Basis, eine erste Facette (f1) und eine zweite Facette (f2), die eben und nicht parallel sind, und eine Spitze (A) aufweisen, wobei die Facetten symmetrisch oder asymmetrisch sind.

4. Vorrichtung nach Anspruch 1,
**dadurch gekennzeichnet, dass** die Reflexionsfläche (FR) mit Lichtreflexionspunkten versehen ist, insbesondere in Form von Ausnehmungen bezüglich der im Übrigen im Wesentlichen glatten Oberfläche dieser Fläche.

5. Vorrichtung nach dem vorhergehenden Anspruch,
**dadurch gekennzeichnet, dass** die Reflexionspunkte durch eine oberflächliche Veränderung der Reflexionsfläche (FR) erzielt werden.

6. Vorrichtung nach einem der vorhergehenden Ansprüche,
**dadurch gekennzeichnet, dass** der Streuschirm (ED) eine Oberfläche gegenüber der Reflexionsfläche (FR) des Lichtleiters aufweist, die für Strahlungen im sichtbaren Bereich im Wesentlichen lichtundurchlässig ist.

7. Vorrichtung nach einem der vorhergehenden Ansprüche,
**dadurch gekennzeichnet, dass** der Streuschirm (ED) eine Oberfläche gegenüber der Reflexionsfläche (FR) des Lichtleiters aufweist, deren Farbe glasklar ist.

8. Vorrichtung nach einem der vorhergehenden Ansprüche,
**dadurch gekennzeichnet, dass** der Streuschirm (ED) eine Oberfläche gegenüber der Reflexionsfläche (FR) des Lichtleiters aufweist, die auf der Grundlage von Titanoxid oder gebleichtem Polymer, insbesondere gebleichtem Polycarbonat ausgeführt ist.

9. Vorrichtung nach einem der vorhergehenden Ansprüche,
**dadurch gekennzeichnet, dass** der Streuschirm (ED) an einer Blende der Vorrichtung befestigt oder Bestandteil derselben ist.

10. Vorrichtung nach einem der vorhergehenden Ansprüche,
**dadurch gekennzeichnet, dass** der Streuschirm (ED) Bestandteil einer Blende der Vorrichtung ist durch lokale Veränderung der Eigenschaften/des Aussehens der Oberfläche der Blende, insbesondere durch Oberflächenerosion, Hinzufügen oder Verhindern einer Beschichtung.

11. Vorrichtung nach einem der vorhergehenden Ansprüche,
**dadurch gekennzeichnet, dass** der Streuschirm (ED) in einem Abstand von wenigstens 0,5 mm zur Reflexionsfläche (FR) des Lichtleiters angeordnet ist.

12. Vorrichtung nach Anspruch 11,
**dadurch gekennzeichnet, dass** der Streuschirm (ED) in einem Abstand zwischen 1 und 5 mm angeordnet ist.

13. Vorrichtung nach einem der vorhergehenden Ansprüche,
**dadurch gekennzeichnet, dass** der Streuschirm (ED) Lichtstrahlen aufnimmt, die aus dem Lichtleiter (G) über die Reflexionsfläche (FR) des Lichtleiters austreten, und diese mit einer im Wesentlichen Lambertschen Winkelverteilung zur Reflexionsfläche (FR) umlenkt.
